Europäisches Patentamt

European Patent Office

Office européen des brevets

(11) Publication number: **0 084 835**
**B1**

(12) EUROPEAN PATENT SPECIFICATION

(45) Date of publication of patent specification: **07.01.87**

(21) Application number: **83100340.5**

(22) Date of filing: **17.01.83**

(51) Int. Cl.⁴: **F 15 B 11/10, F 15 B 13/042,**
**F 16 H 39/46**

(54) Power transmission.

(30) Priority: **20.01.82 US 340980**

(43) Date of publication of application:
**03.08.83 Bulletin 83/31**

(45) Publication of the grant of the patent:
**07.01.87 Bulletin 87/02**

(84) Designated Contracting States:
**DE FR GB IT SE**

(56) References cited:
**DE-A-2 643 180**
**DE-A-2 729 512**
**DE-A-3 001 681**
**US-A-3 696 836**
**US-A-3 758 235**

(73) Proprietor: **Vickers, Incorporated**
**1401 Crooks Road**
**Troy Michigan 48084 (US)**

(72) Inventor: **Breeden, Robert Harlin**
**3509 Farmer's Creek Road**
**Metamora Michigan 48455 (US)**

(74) Representative: **Blumbach Weser Bergen**
**Kramer Zwirner Hoffmann Patentanwälte**
**Sonnenbergerstrasse 43**
**D-6200 Wiesbaden 1 (DE)**

Courier Press, Leamington Spa, England.

## Description

The invention relates to a hydraulic system of the kind referred to in the preamble of Claim 1.

In a hydraulic system of this kind (DE—A—2,729,512) the stroke control directional valve includes a control member under pilot force and a control spool mechanically linked to the servo motor means, control member and spool acting together for porting control fluid and pressure to the servo motor means. The mechanical link is a means for sensing the displacement of the pump and providing a feedback to the stroke control directional valve. However, the pilot force and the feedback force act on different parts. Furthermore, the hydraulic system is for cooperation with an internal combustion engine and has a different purpose to invention.

The hydraulic system of invention is for power transmission on mobile equipment such as excavators and cranes and more particularly intended for automatic braking at preselected braking pressures of swing drives. Such a swing drive may be associated to a boom which can be horizontally rotated. A control arrangement useful for such swing drive is shown in US—A—3,696,836. The arrangement includes a special control valve which permits any desired value of pressure to be applied to the hydraulic motor in either direction to determine the motor output torque. The valve is mechanically acted upon by a joystick.

Among the objectives of the present invention are to provide a hydraulic system which is capable of being operated remotely by utilizing a pilot-operated control valve.

Typically, the torque control of swing drive provides free swing or coasting of the boom on cranes. That is, the boom or the boom and load will immediately decelerate to a stop in the absence of a command signal. In this case, return flow from the motor is relieved with a pressure determined by the setting of a relief valve arranged at the motor work port. The blocked center braking allows rapid alignment of the boom and load and also provides for maintaining the boom stationary with the excavator operating on an inclined surface.

It is also desirable, under certain conditions of operation, to brake the swing drive at the preselected reduced pressure; i.e. a pressure setting below the relief valve pressure setting.

It has been found that some operators, who had their initial training and experience on a free swing braking arrangement on cranes, express a preference for the free swing feature when confronted with the operation of an excavator provided with a blocked center braking arrangement. Conversely, some operators, who have had their initial training on an excavator with the blocked arrangement, express a preference for the blocked center arrangement when confronted with the operation of a crane with a free swing braking arrangement.

In view of the foregoing, it is an object of this invention to provide a hydraulic system capable of automatic braking at preselected pressures of swing drives wherein an operator may selectively choose, by means of a simple adjustment, a free swing braking arrangement, a blocked center braking arrangement, or reduced pressure braking anywhere between the free swing and blocked center braking arrangements.

Accordingly, the selective swing drive should include an automatic braking arrangement for both a torque control hydraulic system and a velocity control hydraulic system.

The technical features to solve the problem referred to above can be taken from Claim 1.

The hydraulic system comprises a reversible variable displacement pump, means for supplying control fluid under pressure, hydraulic servo motor means for controlling the direction and amount of displacement of said pump, a fluid motor connected to be driven by said pump, a pilot operated directional valve for controlling the position and direction of movement of said servo motor means, and means for sensing the displacement of said pump and applying a hydraulic force to said directional valve opposite the force of the pilot pressure.

More specifically, the hydraulic system allows torque control of the fluid motor. The means for supplying control fluid under pressure may be implemented by a charging stage and a relief valve. The reversible variable displacement pump can include a swashplate operable for varying pump displacement, a swashplate stroking cylinder acting against a swashplate biasing cylinder connected to the charging stage for varying the angle of the swashplate and a swashplate angle feedback valve for sensing the angular movement of the swashplate. The directional valve is for controlling fluid flow to the stroking cylinder and includes a spring centered differential area spool having first and second large area annuli and first and second opposed small area ends. The fluid motor for supplying the driving torque to the swing drive is connected to the pump and to both first and second small area ends of the directional valve. The relief valve for providing the control pressure is connected between tank and the directional valve, the charging stage and the biasing cylinder. The means for supplying control fluid may also include a control pressure reducing valve connected in series with the feedback valve. Furthermore, a manually operated hydraulic remote control valve has first and second pilot pressure lines connected to the first and second annuli of the control valve and to the feedback valve through first and second shuttle valves, respectively.

Figure 1 is a schematic of the hydraulic system embodying the invention.

Figure 2 is a curve of feedback pressure versus swashplate angle as the displacement of the variable displacement pump.

Figure 3 is a fragmentary cross sectional view of a feedback device utilized in the system.

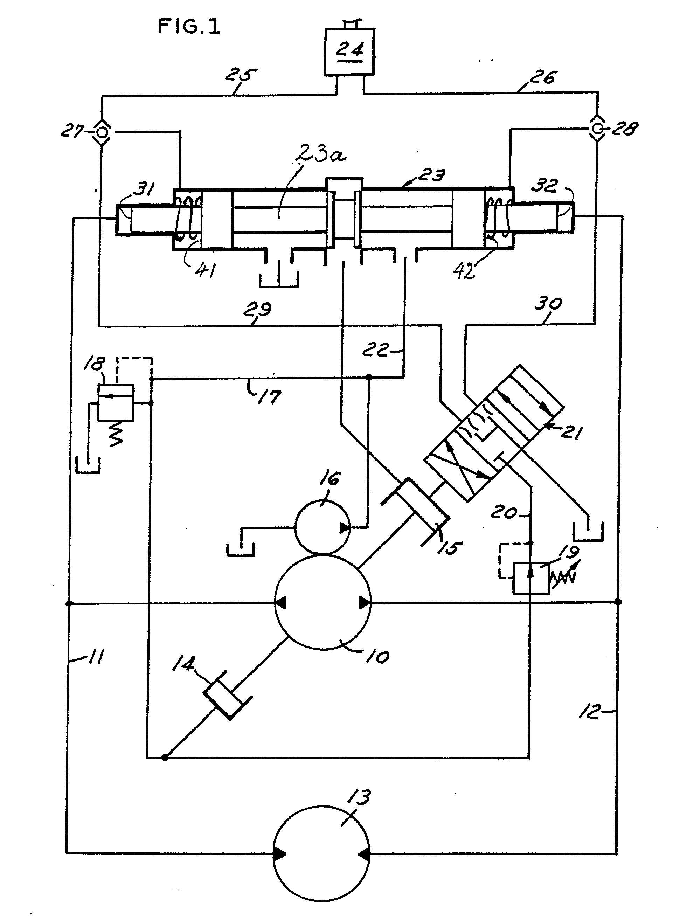

Referring to Figure 1, the hydraulic transmission embodying the invention comprises a reversible variable displacement pump 10 connected by main lines 11, 12 to a fluid motor 13. The displacement of the pump 10 may be varied by means of a servo motor means of the differential area type comprising a small area piston 14 and a large area piston 15. The variable displacement pump 10 includes an auxiliary fixed displacement pump 16 for charging the system and for supplying control fluid under pressure, determined by a low pressure relief valve 18, through a line 17 to the small area piston 14 and to an adjustable pressure reducing valve 19 that extends through a line 20 to a displacement sensing means 21. The auxiliary pump 16 is also connected through a line 22 to a spring centered pilot operated stroke control directional valve 23 which delivers modulated control pressure for the large area piston 15 and has a spool 23a with two end areas 31, 32 connected to the main lines 11, 12. A manually operated hydraulic remote control valve 24 provides pilot pressure through pilot lines 25, 26 to shuttle valves 27, 28 and eventually to an annular area 41 or 42 which are near the opposite ends of the spool 23a to shift same in one direction or the other. The displacement sensing means 21 functions to sense the displacement of the pump 10 and apply a feedback pressure to the stroke control valve 23 opposite to the pilot pressure. To that end, means 21 is connected through lines 29, 30 to the shuttle valves 27, 28 and to the areas 41, 42.

In the neutral position of the hydraulic remote control valve 24, pilot pressure in both pilot lines 25, 26 is zero. If there are no overhauling loads on the hydraulic motor 13, the pressure in both main lines 11, 12 is also zero.

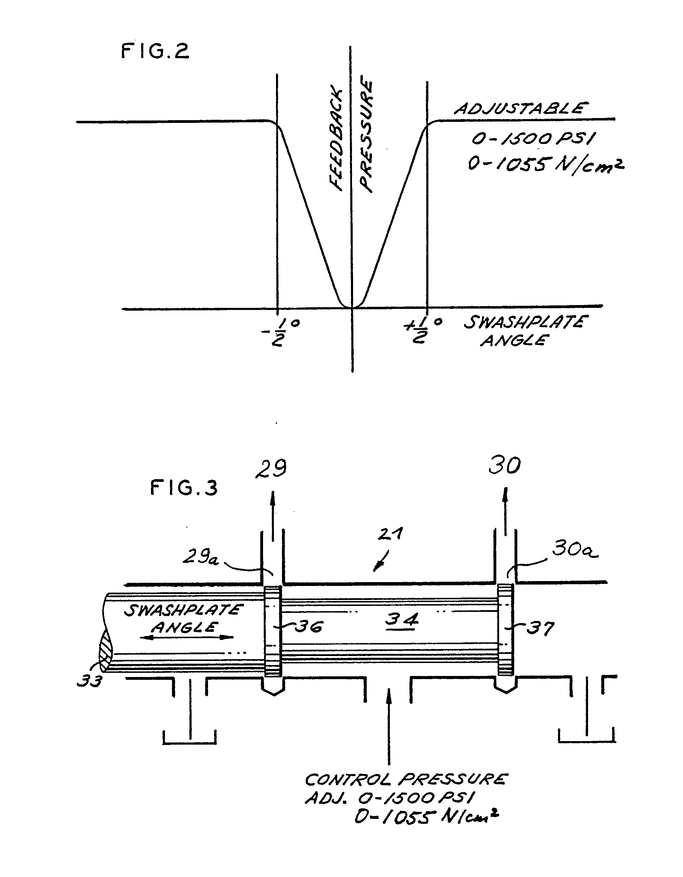

If an overhauling load develops so as to cause a pressure to develop f.i. in the right leg 12 of the main lines, the first reaction is that the spool 23a of the stroke control valve 23 is shifted to the left porting control fluid and pressure to the larger stroking cylinder 15, thereby changing the displacement of the pump 10 so as to accept fluid from the right leg 12 of the main lines. This displacement is sensed by means 21, and a hydraulic signal is formed. The pressure characteristic of this signal as a function of displacement (swashplate angle) is shown in the curve of Figure 2. Such feedback pressure is communicated through line 29 to the annular area 41. The forces acting on the spool 23 of the stroke control valve 23 are such that the pressure in the main line 12 (in the example given) must exceed a certain preselected value before the pump 10 will be shifted significantly away from neutral by the overhauling load. In such situation, feedback pressure is enough to shift back the spool 23a shutting off fluid flow to the stroking cylinder 15 which takes a position as required by the overhauling load and independently from the remote control valve 24 which is still centered.

In order to swing the load by the motor 13, the remote control valve 24 is manually deflected from a centered position. This causes pilot pressure to build-up in one of the pilot lines, f.i. 25. The shuttle valve 27 will shift and allow pilot pressure to act on the annular area 41. The spool 23a of the stroke control valve 23 is shifted to the right, and the large stroking cylinder 15 is allowed to drain to tank so increasing displacement. After a slight movement of the swashplate, the displacement sensing means 21 develops a feedback pressure which is fed via line 30 through the right shuttle valve 28 to the annular area 42 of the spool 23a which is shifted back into its null position. If the swing is not enough, further movement of the remote control valve 24 is required to increase the pilot pressure. The feedback pressure is at a preselected level, selected by adjustment of the pressure reducing valve 19. The pilot pressure via 25 can overbalance feedback pressure via 30 so that the spool 23a will move to the right and the large area piston 15 further drained so that the pump 10 will cause increased flow into the right leg 12 of the main lines. As a load is encountered, the system pressure in line 12 will act on the end area 32 of the stroke control valve spool 23a. A force balance will exist between pilot pressure acting on the annular area 41 and the sum of feedback pressure acting on the annular area 42 and system pressure acting on the end area 32. Pump output pressure and therefore motor output torque thus can be controlled by selecting an appropriate pressure level of the pilot command.

If a driven load tends to increase so as to exceed the torque setting, the spool 23a of the stroke control valve 23, like a compensator valve, will shift against spring force to the left so as to reduce the displacement (swashplate angle). If the pump 10 approaches neutral, the feedback pressure at 42 will reduce to zero as indicated by Figure 2. If the driven load does not subside, the swashplate will remain at neutral until the pressure in line 12 builds to the point that the resulting force exceeds that resulting from pilot pressure acting on the annular area 41 on the spool 23a. As the spool 23a shifts to the left, the displacement becomes negative, i.e. the swashplate goes across center, and feedback pressure will begin to build-up and be fed to the shuttle valve 27. As long as such feedback pressure does not exceed pilot pressure also present at the shuttle valve 27, it has no effect, otherwise it feeds the annular area 41.

Assuming that remote control pilot pressure greater than maximum feedback pressure, the stroke control spool 23a will continue to move to the left and move the pump onto (negative) stroke. If the overhauling load continues to increase, the pump will stroke up to full displacement.

In the case where a high inertia load is of a resistive type and after pump, motor and load have been accelerated up to some speed by applying pilot pressure in the left leg 25 of the remote control, free swing braking is brought about by centering the remote control valve 24 handle, so that pilot pressure in both pilot lines 25, 26 will be zero. Yet the motor 13 being driven by the inertial load will produce some pressure in the main line 11 which will act on the area 31 of the spool 23a. Since displacement is still positive (the swashplate will have been at a positive angle), maximum feedback pressure is acting on the annular area 42 of the stroke control spool 23a and will cause the same to shift to the left (against the force on area 31) and admit control fluid to the large stroking cylinder 15 so that displacement decreases. The load will be decelerated at a preselected pressure level until the pump reaches neutral.

It can be seen that the system will maintain the swing essentially stationary whenever the overhauling pressure (in line 11) is less than that preselected (feedback pressure). Torque to swing a vehicle in either direction can be varied by an operator manually controlling the remote control 24.

If an operator wants to decelerate quicker than explained above, in the sense of blocked center braking, he can move the remote control across neutral and develop a higher deceleration pressure by applying pilot pressure. Maximum deceleration pressure will be higher than maximum drive pressure.

Thus the hydraulic system retains the advantages of an output torque control and achieves automatic braking by utilizing the accompanying circuit. An operator utilizes hydraulic remote control 24 to control the swing drive. Moving the remote control 24 from a neutral position commands swing in a given direction. A certain movement of the lever (say 10—15%) is required before flow would be delivered by the pump. After the initial travel, the system provides output torque proportional to lever travel. If the handle is centered from full speed swing, the motor is decelerated to a preselected braking pressure until motion stopped. If a higher rate of deceleration is desired, the remote control can be deflected across center to command torque in the opposite direction.

This provides braking pressure up to the maximum pressure rating, again proportional to the amount of lever motion. Maximum braking pressure is higher than the maximum driving pressure by an amount equal to the preselected braking pressure at neutral handle settings.

Displacement sensing means 21 is shown in Figure 3 as a swashplate angle feedback device 21 and comprises a spool 33 with undercut center 34 and sealing lands 36 37 oriented at the center position as shown. The spool 33 is positioned axially by the pump stroke mechanism. Sensing holes 20a, 30a pick off pressures and feed them to the shuttle valves 27, 28 and the areas 41, 42 of the stroke control valve 23 through lines 29, 30.

As the spool 33 is shifted to the right, control pressure is admitted to the sensing hole 30a on the right. Pressure on the left sensing hole 29a remains at a low value.

If a pure displacement control is desired, the feedback spool 33 can be altered to provide a feedback pressure proportional to pump displacement.

By eliminating the small pistons 31, 32on either end of the stroke control valve 23, and their communication paths, the system will perform as a pump displacement control.

**Claims**

1. A hydraulic system comprising a reversible variable displacement pump (10), means (16) for supplying control fluid under pressure, hydraulic servo motor means (14, 15) for controlling the direction and amount of displacement of said pump (10), a fluid motor (13) connected to be driven by said pump (10), a stroke control directional valve (23) porting control fluid and pressure for controlling the position and direction of said servo motor means (14, 15), wherein said directional valve (23) is of the pilot pressure operated type, said pilot pressure (from 24) applying a first force to said directional valve (23) to move same in one or the other direction, and wherein means (21) for sensing the displacement of said pump (10) is provided applying a second force to said directional valve (23) opposite to the first force of the pilot pressure (from 24), said directional valve (23) being controlled by said first and second forces, characterized in that said directional valve (23) has a valve member (23a) which both said first and second forces are acting upon, and in that said means (21) for sensing the position of said servo motor (14, 15) comprises a feedback valve applying a hydraulic feedback signal to said directional valve (23) for opposing the direction of movement of said valve member (23a) due to pilot pressure (from 24).

2. The hydraulic system set forth in Claim 1, wherein an auxiliary pump (16) is provided as said means for supplying said control fluid to a small area piston and cylinder (14) and to said directional valve (23), which directs control pressure to a large area piston and cylinder (15), said pistons and cylinders (14, 15) forming said servo motor means.

3. The hydraulic system set forth in Claim 2, including a control pressure relief valve (18) connected to the output of said auxiliary pump (16).

4. The hydraulic system set forth in any of Claims 1—3, including a manually operated hydraulic remote control (24) for supplying pilot pressure to said stroke control directional valve (23), shuttle valve means (27, 28) in lines (25, 26) to said stroke control directional valve (23), said feedback valve (21) being connected through lines (29, 30) to said shuttle valve means (27, 28) such that the feedback pressure opposes the pilot pressure in said shuttle valve means.

5. A hydraulic system set forth in any of Claims 1—4, wherein said pump (10) includes a swashplate operable for varying pump displacement by said servo motor means (14, 15), wherein said means (21) for sensing the displacement is for sensing the angular movement of the swashplate, and wherein said stroke control directional valve (23) includes a spring centered differential area spool (23a) having first and second large area annuli (41, 42) and first and second opposed small area ends (31, 32), each port of said hydraulic motor (13) being connected to one of said first and second small area ends (31, 32) of the directional valve (23).

6. The hydraulic system set forth in any of Claims 1—5, including a control pressure reducing valve (19) connected between output of said means (16) for supplying control fluid under pressure and the pressure inlet of said feedback valve (21).

**Patentansprüche**

1. Hydraulisches System mit einer Pumpe mit veränderlichem Verdrängungsvolumen und mit zwei Stromrichtungen, mit einer Steuerdruckfluidzufuhreinrichtung (16), mit einem hydraulischen Stellmotor (14, 15) zur Steuerung der Stromrichtung und des Verdrängungsvolumens der Pumpe (10), mit einem Fluidmotor (13), der zum Antrieb durch die Pumpe (10) geschaltet ist, mit einem Hubsteuer-Wegeventeil (23), das Steuerfluid und -druck zur Steuerung der Lage und Verschiebungsrichtung des Stellmotors (14, 15) abgibt, wobei das Wegeventil (23) durch Pilotdruck betätigt ist, der Pilotdruck (von 24) eine erste Kraft an das Wegeventil (23) anlegt, um dieses nach der einen oder anderen Richtung zu verschieben und wobei eine Abtasteinrichtung (21) der Pumpenverdrängung (10) vorgesehen ist, eine zweite Kraft entgegengesetzt der ersten Kraft des Pilotdrucks (von 24) an das Wegeventil (23) zu legen, welches von dieser ersten und zweiten Kraft gesteuert wird, dadurch gekennzeichnet, daß das Wegeventil (23) ein Ventilglied (23a) aufweist, auf welches sowohl die erste als auch die zweite Kraft einwirkt und daß die Abtasteinrichtung (21) für die Lage des Stellmotors (14, 15) ein Rückkopplungsventil aufweist, welches an das Wegeventil (23) ein hydraulisches Rückkopplungssignal entgegengesetzt zur Verschiebungsrichtung des Ventilgliedes (23a) infolge des Pilotdrucks (von 24) anlegt.

2. Hydraulisches System nach Anspruch 1, dadurch gekennzeichnet, daß ein Hilfspumpe (16) als Steuerfluidzufuhreinrichtung zu einem kleinflächigen Kolben und Zylinder (14) und zu dem Wegeventil (23) vorgesehen ist, welches Steuerdruck zu einem großflächigen Kolben und Zylinder (15) richtet, wobei die Kolben und Zylinder (14, 15) den Stellmotor darstellen.

3. Hydraulisches System nach Anspruch 2, dadurch gekennzeichnet, daß ein Steuerdruckbegrenzungsventil (18) mit dem Auslaß der Hilfspumpe (16) in Verbindung steht.

4. Hydraulisches System nach einem der Ansprüche 1 bis 3, dadurch gekennzeichnet, daß eine von Hand betätigbare hydraulische Fernsteuereinrichtung (24) zur Zuführung von Pilotdruck an das Hubsteuer-Wegeventil (23) vorgesehen ist, daß ein Wechselventileinrichtung (27, 28) in Leitungen (25, 26) zu dem Hubsteuerwegventil (23) angeordnet sind und daß das Rückkopplungsventil (21) über Leitungen (29, 30) mit der Wechselventileinrichtung (27, 28) so verbunden ist, daß der Rückkopplungsdruck dem Pilotdruck in der Wechselventileinrichtung entgegengesetzt ist.

5. Hydraulisches System nach einem der Ansprüche 1 bis 4, dadurch gekennzeichnet, daß die Pumpe (10) eine Schrägscheibe aufweist, die von dem Stellmotor (14, 15) für veränderliches Verdrängungsvolumen betätigbar ist, daß die Abtasteinrichtung (21) des Verdrängungsvolumens zum Abtasten der Winkelbewegung der Schrägscheibe eingerichtet ist und daß das Hubsteuer-Wegeventil (23) einen federzentrierten Schieberkolben (23a) mit Differenzflächen aufweist, der erste und zweite großflächige Ringflächen (41, 42) und entgegengesetzt wirkende ersrte und zweite kleinflächige Endflächen (31, 32) aufweist, und daß jeder Auschluß des Hydromotors (13) mit einem der ersten und zweiten kleinflächigen Endflächen (31, 32) des Wegeventils (23) verbunden ist.

6. Hydraulisches System nach einem der Ansprüche 1 bis 5, dadurch gekennzeichnet, daß ein Steuerdruckreduzierventil (19) zwischen dem Auslaß der Steuerdruckfluid-Zufuhreinrichtung (16) und dem Druckeinlaß des Rückkopplungsventils (21) angeordnet ist.

**Revendications**

1. Un système hydraulique comprenant:
— une pompe à cylindrée variable réversible (10), un dispositif (16) d'alimentation en fluide de commande sous pression, des servo-moteurs hydrauliques (14, 15) pour commander la direction et la valeur de cylindrée de ladite pompe (10), un moteur fluidique (13) branché de façon à être entraîné par ladite pompe (10),
— un distributeur de commande de course (23) distribuant du fluide de commande et une pression pour commander la position et la direction des servo-moteurs (14, 15), ledit distributeur (23) étant du type actionné par pression pilote, ladite pression pilote (provenant de 24) appliquant une première force audit distributeur (23) pour le faire déplacer dans l'une ou l'autre direction, et où il est prévu un moyen (21) de détection de la cylindrée de ladite pompe (10) pour appliquer une seconde force audit distributeur (23) en opposition à la première force de la pression pilote (provenant de 24), ledit distributeur (23) étant commandé par lesdites première et seconde forces,
— caractérisé en ce que ledit distributeur (23) comporte un élément distributeur (23a) qui est sollicité par lesdites première et seconde forces et en ce que ledit moyen (21) pour détecter la position desdits servomoteurs (14, 15) comprend une valve de réaction appliquant un signal de réaction hydraulique audit distributeur (23) pour s'opposer à la direction de déplacement dudit élément de distribution (23a) sous l'effet de la pression pilote (provenant de 24).

2. Le système hydraulique défini dans la revendication 1, dans lequel une pompe auxiliaire (16) est prévue pour constituer ledit moyen servant à alimenter en fluide de commande un cylindre (14) avec piston de petite section et ledit distributeur (23), qui dirige la pression de commande sur un cylindre (15) avec piston de grande section, lesdits piston et cylindre (14, 15) formant lesdits servo-moteurs.

3. Le système hydraulique défini dans la revendication 2, comportant une soupape de sûreté (18) pour la pression de commande, reliée à la sortie de ladite pompe auxiliaire (16).

4. Le système hydraulique défini dans une quelconque des revendications 1 à 3, comportant une télécommande hydraulique (24) actionnée manuellement pour alimenter en pression pilote ledit distributeur de commande de course (23), les valves à clapets (27, 28) prévues dans des conduits (25, 26) aboutissant audit distributeur de commande de course (23), ladite valve de réaction (21) étant reliée par l'intermédiaire de conduite (29, 30) auxdites valves à clapets (27, 28) de telle sorte que la pression de réaction s'oppose à la pression pilote dans lesdites valves à clapets.

5. Un système hydraulique tel que défini dans une quelconque des revendications 1 à 4, dans lequel ladite pompe (10) comprend un plateau oscillant pouvant opérer pour faire varier la cylindrée de pompe sous l'action desdits servo-moteurs (14, 15), dans lequel le moyen (21) de détection de cylindrée assure la détection du mouvement angulaire du plateau oscillant, et dans lequel ledit distributeur de commande de course (23) comporte un tiroir (23a) à section différentielle centré par ressort, comportant des premier et second anneaux de grande section (41, 42) et des première et seconde extrémités opposées de petite section (31, 32), chaque orifice dudit moteur hydraulique (13) étant relié à une desdites première et seconde extrémités de petite section (31, 32) du distributeur (23).

6. Le système hydraulique tel que défini dans une quelconque des revendications 1 à 5, comportant une valve de réduction de pression de commande (19) branchée entre une sortie dudit dispositif (16) d'alimentation en fluide de commande sous pression et l'entrée de pression de ladite valve de réaction (21).

FIG.1

0 084 835

FIG.2

FEEDBACK PRESSURE

ADJUSTABLE

0-1500 PSI
0-1055 N/cm²

$-\frac{1}{2}°$     $+\frac{1}{2}°$    SWASHPLATE ANGLE

FIG.3

29       30

21

29a       30a

SWASHPLATE ANGLE

36    34    37

33

CONTROL PRESSURE
ADJ. 0-1500 PSI
0-1055 N/cm²